Europäisches Patentamt

European Patent Office

Office européen des brevets

(19)

(11) Veröffentlichungsnummer: **0 218 937 B1**

(12) **EUROPÄISCHE PATENTSCHRIFT**

(45) Veröffentlichungstag der Patentschrift: **24.04.91**

(51) Int. Cl.⁵: **F16C 29/00**

(21) Anmeldenummer: **86112788.4**

(22) Anmeldetag: **16.09.86**

(54) **Führungsbuchse.**

(30) Priorität: **16.09.85 DE 8526480 U**

(43) Veröffentlichungstag der Anmeldung:
**22.04.87 Patentblatt 87/17**

(45) Bekanntmachung des Hinweises auf die
Patenterteilung:
**24.04.91 Patentblatt 91/17**

(84) Benannte Vertragsstaaten:
**AT BE CH DE FR GB IT LI LU NL SE**

(56) Entgegenhaltungen:
**EP-A- 0 143 410        DE-A- 1 625 612
DE-A- 2 520 246        DE-A- 2 609 911
DE-B- 1 063 863        FR-A- 2 554 531**

(73) Patentinhaber: **HÖRMANN KG BIELEFELD
Bleichstrasse 67
W-4800 Bielefeld 1(DE)**

(72) Erfinder: **Hörmann, Stephan, Dipl.-Phys.
Hedwigstrasse 11
W-4830 Gütersloh(DE)**

(74) Vertreter: **Flügel, Otto, Dipl.-Ing.
Wissmannstrasse 14, Postfach 81 05 06
W-8000 München 81(DE)**

## Beschreibung

Die Erfindung betrifft eine Führungsbuchse mit den Merkmalen des Oberbegriffes des Anspruches 1.

Es ist eine Lagerung für Schaltwellen bekannt (DE-B-10 63 863), bei der ein schlauchförmiger Hohlkörper in eine Anzahl von einzelnen, an den Enden offenen Schlauchstücken unterteilt ist, die an Linien in Umfangsrichtung der Schaltwelle an dieser und am Lagerkörper befestigt sind. Der Hohlkörper ist hierbei aus einem verformbaren Werkstoff hergestellt.

Es ist weiterhin ein Gelenk bekannt (CH-A-463 885), bei dem Hohlringe als offene oder geschlossene Schläuche ausgebildet sein können und im Innenbereich ein flüssiges oder gasförmiges Fluid als Schmierstoff aufweisen, wobei die beiden (äußeren und inneren) Teile des Hohlrings aneinander anliegen. Schließlich ist der Hohlring jeweils an den beiden aneinander festzulegenden Teilen zumindest an einer Stelle festgelegt.

Eine Führungsbuchse der eingangs genannten Art ist aus der DE-A-2 520 246 (1) bekannt und bildet dort ein schmiegsames Dichtgelenk, das zwischen zwei Elementen - beispielssweise Stab und Rohr -, von denen das eine gegen das andere durch eine Hin- und Herbewegung verschiebbar ist, eine absolute Abdichtung sicherstellt, ohne Reibung zu erzeugen. Die beiden Elemente zeigen dabei als Beispiele kreisförmigen bzw. kreisringförmigen Querschnitt und verlaufen gerade. Der zwischen den Elementen angeordnete Hohlring ist aus einem schmiegsamen elastischen Material und mit einer unter Druck stehenden Flüssigkeit gefüllt. Des weiteren ist aus diesem Stand der Technik bekannt, den Hohlring quer zu seiner Längsachse außenseitig umlaufend aufgeschlitzt auszubilden und eine Einfüllöffnung für das Fluid vorzusehen.

Mit einer solchen bekannten Führungsbuchse wird eine Führungsfunktion in Ausrichtung des Stabes bzw. des konzentrisch dazu angeordneten Rohres bewirkt, die längs eines Freiheitsgrades der Relativbewegung der beiden Elemente praktisch reibungsfrei erfolgt.

Der Erfindung liegt die Aufgabe zugrunde, eine Führungsbuchse mit den Merkmalen des Oberbegriffes des Anspruches 1 so weiterzubilden, daß sie neben der Führungsfunktion zugleich federn und dämpfen kann.

Diese Aufgabe wird gemäß dem kennzeichnenden Teil des Anspruches 1 gelöst.

Erfindungsgemäß wird demnach derart vorgegangen, daß bei Relativbewegung in wenigstens eine der beiden Richtungen der Führungsbahn eine Druckänderung auf das Fluid ausgeübt wird, so daß die Bewegung des Stabes gegenüber dem Rohr oder umgekehrt abgefedert und/oder gedämpft ist.

Zu diesem Zwecke kann ein elastischer Hohlring mit einem inkompressiblen Fluid oder ein unelastischer Hohlring mit einem kompressiblen Fluid benutzt und darüber hinaus der Hohlring in seiner Arbeitsstellung so angeordnet sein, daß er noch nicht vollständig von dem Rohr umfaßt ist und beim Einfedern vielmehr in dieses eintaucht. Bei entsprechender Dimensionierung ergeben sich beim Einziehen des Hohlringes in das Rohr Verdrängungen an Volumen des darin befindlichen Fluids bei einem aus elastischdehnbarem Kunststoff bestehenden Hohlring bzw. Kompressionen des kompressiblen Fluids bei einem Hohlring aus unelastischem Werkstoff, so daß eine rücktreibende Federungskraft auftritt.

Derselbe Federungseffekt ergibt sich bei vollständig von dem Rohr umschlossenem Hohlring dann, wenn der Querschnitt des Ringspaltes über die Führungshöhe der Führungsbuchse verändert, beispielsweise nach unten hin verengt wird, was durch Vergrößerung des Querschnitts des Stabes und/oder Verkleinerung des Innenquerschnitts des Rohres geschehen kann.

Wenn des weiteren im Inneren des Hohlrings dessen freien Querschnitt begrenzende Vorsprünge, Noppen oder dergleichen Hindernisse angeordnet werden, so wird der Strömungsquerschnitt im Bereich der Führungsbuchse verringert und damit der Strömungswiderstand erhöht, so daß sich außerdem eine Dämpfungswirkung ergibt. Diese kann alleine oder zusammen mit den vorstehend beschriebenen Federungsmöglichkeiten auftreten, und zwar entweder gleichzeitig oder erst nacheinander. In jedem Falle bleibt aber die Führungsfunktion bestehen.

Es ist ferner eine zweigeteilte Ausbildung mit der Erfindung bekannt, wobei der Hohlring quer zur Achse des Stabes auf seiner Außenseite umlaufend geschlitzt offen ausgebildet ist und jedes Teilrohr einen Flansch aufweist. Jeder von dem offenen Hohlrohr gebildete Rand wird zwischen dem Flansch jedes Teilrohrs und einem gesonderten Mittelring durch Klemmen festgelegt, indem beispielsweise die Teile miteinander fest verschraubt sind. Bei dieser Ausführungsform, die einfach herzustellen ist, können dieselben Federungs- und Dämpfungseigenschaften wie bei dem geschlossenen Torus erzielt werden, allerdings ist an jedem Teilrohr ein Flansch und der Mittelring erforderlich. Es ist auch möglich, nur ein Teilrohr zu verwenden und den anderen Teil des Hohlringes frei außen oder jedenfalls über ein Teilrohr vorstehend auszubilden. Bei dieser Ausführungsform wird der zunächst leere torusförmige Hohlring montiert und danach das Fluid über den Mittelring bzw. dort angebrachte Bohrungen oder dergleichen zugeführt, die zugleich als Entlüftungsöffnungen dienen können. Bei dieser Ausführungsform ist es von Vorteil, daß der Druck des Fluids einstellbar ist.

Zweckmäßige Ausgestaltungen und Weiterbildungen der Erfindung sind in den Unteransprüchen gekennzeichnet.

Drei bevorzugte Ausführungsbeispiele der Erfindung werden nachfolgend unter Bezugnahme auf die Zeichnungen näher erläutert.

In diesen zeigen:

Figur 1      eine erste Führungsbuchse mit sowohl federnden als auch dämpfenden Eigenschaften;

Figur 2      eine zweite Führungsbuchse mit dämpfenden Eigenschaften, jeweils in schematischem Querschnitt;

Figur 3      eine dritte Ausführungsform mit einem außen geteilten Hohlring.

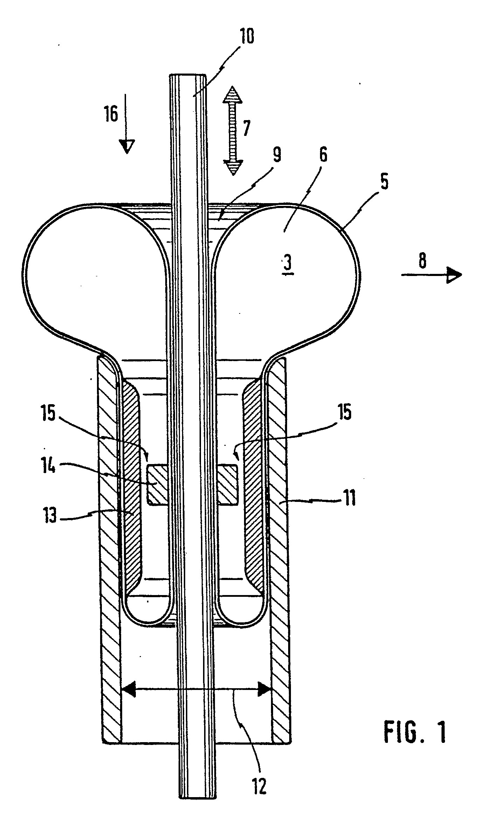

Die in Figur 1 im Querschnitt gezeichnete Führungsbuchse weist einen flexiblen Hohlring 5 mit einem darin befindlichen Fluid 6 auf. Der Hohlring 5 erstreckt sich mehr in axialer Richtung 7 als in radialer Richtung 8 des insgesamt torusförmigen Hohlringes 5.

In der Öffnung 9 des Hohlringes 5 ist ein zumindest den freien Querschnitt der Öffnung 9 einnehmender und durch die Öffnung 9 hindurchgesteckter Stab 10 angeordnet. Parallel zu dessen Erstreckung sowie konzentrisch zu diesem ist ein Rohr 11 vorgesehen, dessen schematisch mit 12 bezeichneter freier Querschnitt höchstens der von der Kontur des Hohlringes 5 mit dem hindurchgesteckten Stab 10 umschlossenen Fläche entspricht.

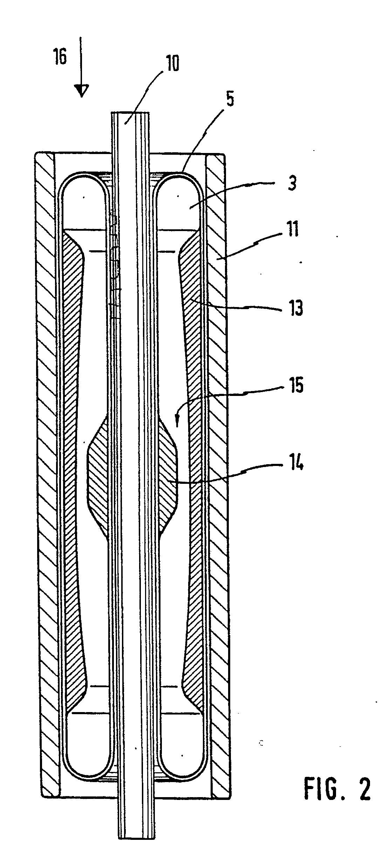

Desweiteren sind im Hohlraum 3 des Hohlringes 5 dessen freien Querschnitt begrenzende Vorsprünge 13 sowie Rippen 14 vorgesehen, so daß der Strömungsquerschnitt 15 für das Fluid 6 in Betrieb der Führungsbuchse, d.h. beim Einfedern gemäß Richtungspfeil 16 unter gleichzeitiger Vergrößerung des Strömungswiderstandes für das Fluid 6 verringert wird. Aufgrund dieser Ausbildung ist beim Bewegen des Stabes 10 gemäß Richtungspfeil 16 zunächst mit einer Federungswirkung, d. h. mit einer entgegen Richtungspfeil 16 wirkenden rücktreibenden Kraft solange zu rechnen, bis der Hohlring 5 vollständig, wie in Figur 2 gezeigt, von dem Rohr 11 umgriffen ist. Zugleich ist ersichtlich, daß das beim Einziehen des Hohlringes 5 in das Rohr 11 verdrängte Fluid als Druckkraft auf den Hohlring 5 aus elastischem Kunststoff wirkt, der sich infolgedessen solange dehnt, bis er die in Figur 2 gezeigte Lage erreicht hat. In dieser Stellung - gleicher Ringspaltquerschnitt zwischen dem Stab 10 und dem Rohr 11 überall vorausgesetzt - besitzt der Hohlring 5 keine Federungseigenschaften mehr. Es folgt lediglich eine Dämpfung infolge des verringerten Strömungsquerschnittes 15. Diese Dämpfung war auch wirksam bei der Stellung gemäß Figur 1, d. h. zugleich mit der Federwirkung.

In Figur 2 ist im übrigen eine Ausführungsform wiedergegeben, bei der der Hohlring in jeder Arbeitslage innerhalb des Rohres verbleibt.

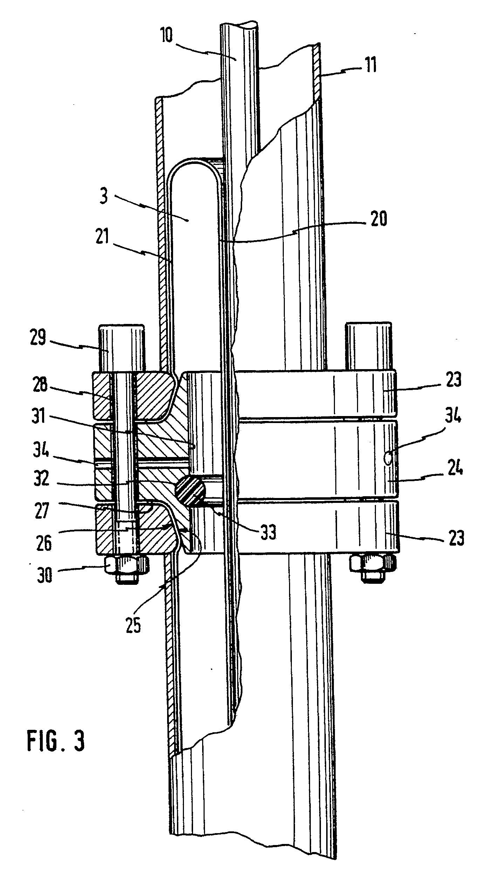

Figur 3 zeigt einen Hohlring 20, der zur Achse des Stabes 10 quer auf seiner außenliegenden Seite 21 geteilt ist, wobei auch das Rohr 11 zweigeteilt ist und jedes Teilrohr mit einem umlaufenden Flansch 23 versehen ist, zwischen denen ein insgesamt mit 24 bezeichneter Mittelring angeordnet ist. Der Mittelring weist zwei symmetrisch zueinander angeordnete, sich keilförmig auf jeden Flansch 23 hin verjüngende, keilförmige Schrägflächen 25 auf. Die Gegenflächen 26 am Flansch 23 sind entsprechend ausgebildet. Zwischen ihnen sind die Ränder 27 des Hohlrings 21 festgeklemmt. Zu diesem Zwecke weisen der Flansch 23 und das Mittelstück 24 außerhalb des lichten Querschnitts jedes Teilrohres 11 sich jedoch parallel zur Stange 10 erstreckende Bohrungen 28 auf, durch die Klemmschrauben 29 hindurchgesteckt und mittels Muttern 30 gesichert sind.

Der Mittelring 24 weist im Inneren eine zylindrische Innenwand 31 auf, in der eine umlaufende Nut 32, vorzugsweise im Querschnitt halbkreisförmig, für einen mit insgesamt 33 bezeichneten O-Ring als Dämpfungskörper ausgebildet ist, der zwischen sich und der inneren Wand des Hohlrings 20 einen schmalen Schlitz für das Fluid aufweist, das über eine Einfüllöffnung 34 in dem Mittelring 24 eingefüllt werden kann.

In nicht dargestellter Weise können in Längsrichtung des Stabes (10) oder quer dazu Vertiefungen und Erhebungen vorgesehen sein, die mit korrespondierend verlaufend an der Außenseite des Hohlringes ausgebildeten Erhebungen und Vertiefungen ineinandergreifen, so daß eine formschlüssige Festlegung zwischen diesen Teilen in Umfangsrichtung des Stabes oder in dessen Längsrichtung gegeben ist.

## Ansprüche

1. Führungsbuchse mit einem flexiblen Hohlring (5; 20), in dessen Hohlraum (3) sich ein Fluid (6) befindet, mit einem zumindest den freien Querschnitt der Öffnung (9) des Hohlringes (5) einnehmenden und durch diese hindurchgesteckten Stab (10) und mit einem parallel zur Erstreckung des Stabes (10) angeordneten Rohr (11), dessen freier Querschnitt (12) höchstens der von der Kontur des Hohlringes (5) mit hindurchgestecktem Stab (10) umschlossenen Fläche entspricht, wobei der Stab (10) und das Rohr (11) unter Verformung des Hohlringes (5) in Führungsrichtung zueinander relativ bewegbar sind,

**dadurch gekennzeichnet,**
daß die Relativbewegung zwischen dem Stab (10) und dem Rohr (11) aufgrund einer dadurch hervorgerufenen Druckänderung des Fluids (6) abgefedert und/oder gedämpft ist.

2. Buchse nach Anspruch 1,
**dadurch gekennzeichnet,**
daß der Hohlring (5) in seiner Arbeitsstellung so angeordnet ist, daß er nicht vollständig von dem Rohr (11) umfaßt ist und bei Einfederbewegung in dieses eintaucht.

3. Buchse nach Anspruch 1,
**dadurch gekennzeichnet,**
daß der Hohlring (5; 20) von dem Rohr (11) vollständig umschlossen ist.

4. Buchse nach einem der Ansprüche 1 bis 3,
**dadurch gekennzeichnet,**
daß der Hohlring (5; 20) aus elastisch dehnbarem Kunststoff besteht.

5. Buchse nach Anspruch 4,
**dadurch gekennzeichnet,**
daß das Fluid inkompressibel ist.

6. Buchse nach einem der Ansprüche 1 bis 3,
**dadurch gekennzeichnet,**
daß der flexible Hohlring aus unelastischem Werkstoff besteht.

7. Buchse nach Anspruch 4 oder 6,
**dadurch gekennzeichnet,**
daß das Fluid kompressibel ist.

8. Buchse nach Anspruch 7,
**dadurch gekennzeichnet,**
daß das Fluid (6) ein kompressibles Gas ist.

9. Buchse nach Anspruch 5,
**dadurch gekennzeichnet,**
daß das Fluid (6) eine inkompressible Flüssigkeit ist.

10. Buchse nach einem der Ansprüche 1 bis 9,
**dadurch gekennzeichnet,**
daß der Stab (10) sowie das Rohr (11) im Querschnitt kreisförmig sind.

11. Buchse nach einem der Ansprüche 1 bis 10,
**dadurch gekennzeichnet,**
daß die Erstreckung des Stabes (10) sowie des dazu konzentrischen Rohres (11) gekrümmt oder gerade ist.

12. Buchse nach einem der Ansprüche 1 bis 11,
**dadurch gekennzeichnet,**

daß das Fluid (6) eine Flüssigkeit oder ein Gas jeweils hoher Viskosität ist.

13. Buchse nach einem der Ansprüche 1 bis 12,
**dadurch gekennzeichnet,**
daß der Hohlring (5; 20) eine größere Erstrekkung in axialer Richtung (7) als in radialer Richtung (8) aufweist.

14. Buchse nach einem der Ansprüche 1 bis 13,
**dadurch gekennzeichnet,**
daß der Hohlraum (3) des Hohlrings (5) dessen freien Querschnitt begrenzende Vorsprünge (13), Noppen (14) oder dergleichen Hindernisse aufweist, so daß der Strömungsquerschnitt (15) für das Fluid (6) im Betrieb der Buchse verringert ist.

15. Buchse nach einem der Ansprüche 1 bis 14,
**dadurch gekennzeichnet,**
daß der flexible Hohlring (5; 20) auf seiner Außenseite sich in Längsrichtung des Stabes (10) erstreckende Rillen, Riefen, Noppen oder dergleichen Erhebungen und Vertiefungen aufweist, die mit entsprechenden Erhöhungen und Vertiefungen an dem Stab (10) in Eingriff stehen und beide Teile zumindest teilweise formschlüssig aneinander in Umfangsrichtung des Stabes (10) festlegen.

16. Buchse nach einem der Ansprüche 1 bis 14,
**dadurch gekennzeichnet,**
daß der flexible Hohlring (5; 20) auf seiner Außenseite sich quer zur Längsrichtung des Stabes (10) erstreckende Rillen, Riefen, Noppen oder dergleichen Erhebungen und Vertiefungen aufweist, die mit entsprechenden Erhöhungen und Vertiefungen an dem Stab (10) in Eingriff stehen und die beide Teile zumindest teilweise formschlüssig in Längsrichtung des Stabes aneinander festlegen.

17. Buchse nach einem der Ansprüche 1 bis 16 mit quer zu seiner Längsachse auf seiner außenliegenden Seite (21) umlaufend aufgeschlitzt offen ausgebildetem Hohlring (20),
**dadurch gekennzeichnet,**
daß das Rohr (11) zweigeteilt und jedes Teilrohr mit einem Flansch (23) versehen ist und daß jeder von dem offenen Hohlring gebildeter Rand (27) zwischen einem der beiden Flansche jedes Teilrohrs und einem gesonderten Mittelring (24) festgelegt ist.

18. Buchse nach Anspruch 17,
**dadurch gekennzeichnet,**
daß der Flansch (23) starr mit dem Rohr verbunden ist.

**19.** Buchse nach Anspruch 17 oder 18, **dadurch gekennzeichnet,** daß der Flansch (23) parallel zum Rohr, jedoch außerhalb dessen lichten Querschnittes sich erstreckende Bohrungen (28) aufweist.

**20.** Buchse nach Anspruch 19 mit zumindest einer Einfüllöffnung (34) für das Fluid, **dadurch gekennzeichnet,** daß die Einfüllöffnung (34) in dem Mittelring (24) vorgesehen ist.

**21.** Buchse nach einem der Ansprüche 1 bis 20, **dadurch gekennzeichnet,** daß der Mittelring (24) eine zylindrische Innenwand (31) aufweist.

**22.** Buchse nach Anspruch 21, **dadurch gekennzeichnet,** daß der Mittelring (24) zwei symmetrisch zueinander angeordnete, sich keilförmig auf jeden Flansch (23) der Teilrohre hin verjüngende, keilförmig ausgebildete Schrägflächen (25) aufweist.

**23.** Buchse nach einem der Ansprüche 1 bis 22, **dadurch gekennzeichnet,** daß der Mittelring (24) zumindest eine im Bereich der zylindrischen Innenwand (31) umlaufende Nut (32) zur Aufnahme eines Dämpfungskörpers (33) aufweist.

**24.** Buchse nach Anspruch 23, **dadurch gekennzeichnet,** daß die Nut (32) im Querschnitt halbkreisförmig ist und der Dämpfungskörper als O-Ring (33) ausgebildet ist.

**25.** Buchse nach einem der Ansprüche 17 bis 24, **dadurch gekennzeichnet,** daß der Flansch (23) eine der keilförmigen Schrägfläche (25) entsprechende Gegenfläche (26) zum Einspannen des Randes (27) des Hohlrings (20) aufweist.

**26.** Buchse nach Anspruch 9, **dadurch gekennzeichnet,** daß das Fluid eine Nicht-Newton'sche Flüssigkeit ist.

## Claims

**1.** Guide bushing having a flexible hollow ring (5;20), in the hollow space (3) of which there is a fluid (6), having a rod (10) which occupies at least the free cross-section of the opening (9) of the hollow ring (5) and is passed therethrough, and having a tube (11) arranged parallel to the longitudinal direction of the rod (10), the free cross-section (12) of said tube (11) corresponding at most to the area enclosed by the contour of the hollow ring (5) with the rod (10) passing through it, the rod (10) and tube (11) being movable relative to each other in the direction of guiding, with deformation of the hollow ring (5), characterised in that the relative movement between the rod (10) and the tube (11) is cushioned and/or attenuated by a resulting change in the pressure of the fluid (6).

**2.** Bushing according to claim 1, characterised in that the hollow ring (5) is arranged in its operational position so that it is not entirely enclosed by the tube (11) and, during the cushioning movement, moves down into the tube (11).

**3.** Bushing according to claim 1, characterised in that the hollow ring (5,20) is fully enclosed by the tube (11).

**4.** Bushing according to one of claims 1 to 3, characterised in that the hollow ring (5,20) consists of resiliently expandable plastics.

**5.** Bushing according to claim 4, characterised in that the fluid is incompressible.

**6.** Bushing according to one of claims 1 to 3, characterised in that the flexible hollow ring consists of inelastic material.

**7.** Bushing according to claim 4 or 6, characterised in that the fluid is compressible.

**8.** Bushing according to claim 7 characterised in that the fluid (6) is a compressible gas.

**9.** Bushing according to claim 5, characterised in that the fluid (6) is an incompressible liquid.

**10.** Bushing according to one of claims 1 to 9, characterised in that the rod (10) and tube (11) are circular in cross-section.

**11.** Bushing according to one of claims 1 to 10, characterised in that the longitudinal configuration of the rod (10) and of the tube (11) concentric therewith is curved or straight.

**12.** Bushing according to one of claims 1 to 11, characterised in that the fluid (6) is a liquid or gas of high viscosity.

13. Bushing according to one of claims 1 to 12, characterised in that the hollow ring (5,20) is greater in extent in the axial direction (7) than in the radial direction (8).

14. Bushing according to one of claims 1 to 13, characterised in that the hollow space (3) of the hollow ring (5) has projections (13), knobs (14) or similar obstructions defining the free cross-section thereof, so that the cross-section of flow (15) for the fluid (6) is reduced when the bushing is in operation.

15. Bushing according to one of claims 1 to 14, characterised in that the flexible hollow ring (5,20) has on its outside grooves, ridges, knobs or similar elevations and depressions extending in the longitudinal direction of the rod (10), which engage with corresponding elevations and depressions on the rod (10) and the two parts interlocking to engage with each other, at least partially, in the circumferential direction of the rod (10.)

16. Bushing according to one of claims 1 to 14, characterised in that the flexible hollow ring (5,20) has on its outside grooves, ridges, knobs or similar elevations and depressions extending transversely with respect to the longitudinal direction of the rod (10), which engage with corresponding elevations and depressions on the rod (10), and the two parts interlocking to engage with each other, at least partially, in the longitudinal direction of the rod.

17. Bushing according to one of claims 1 to 16 having a hollow ring (20) which is slotted at right angles to its longitundinal axis on the outside (21) thereof and of open construction, characterised in that the tube (11) is in two parts and each tube part is provided with a flange (23) and each edge (27) formed by the open hollow ring is secured between one of the two flanges of each tube part and a separate centre ring (24).

18. Bushing according to claim 17, characterised in that the flange (23) is rigidly connected to the tube.

19. Bushing according to claim 17 or 18, characterised in that the flange (23) has bores (28) extending parallel to the tube but outside the internal cross-section thereof.

20. Bushing according to claim 19 having at least one fill opening (34) for the fluid, characterised in that the fill opening (34) is provided in the centre ring (24).

21. Bushing according to one of claims 1 to 20, characterised in that the centre ring (24) has a cylindrical inner wall (31).

22. Bushing according to claim 21, characterised in that the centre ring (24) has two symmetrically arranged sloping surfaces (25) of wedge-shaped configuration and tapering in a wedge shape towards each flange (23) of the tube parts.

23. Bushing according to one of claims 1 to 22, characterised in that the centre ring (24) has at least one groove (32) running round it in the region of the cylindrical inner wall (31), for receiving a damping member (33).

24. Bushing according to claim 23, characterised in that the groove (32) is semi circular in cross section and the damping member is constructed as an O-ring (33).

25. Bushing according to one of claims 17 to 24, characterised in that the flange (23) has a counter-surface (26), corresponding to the wedge-shaped sloping surface (25), for clamping the edge (27) of the hollow ring (20).

26. Bushing according to claim 9, characterised in that the fluid is a non-Newtonian fluid.

**Revendications**

1. Manchon de guidage avec un anneau creux flexible (5 ; 20), dont l'espace creux (3) contient un fluide (6) une barre (10) occupant et traversant au moins la section libre de l'orifice (9) de l'anneau creux (5), un tube (11) parallèle à la barre (10), dont la section libre (12) correspond au plus à la surface enveloppée du contour de l'anneau creux avec la barre (10) insérée, la barre (10) et le tube (11) étant déplaçables l'un par rapport à l'autre par déformation de l'anneau creux (5) dans le sens de guidage, caractérisé en ce que le mouvement relatif entre la barre (10) et le tube (11) est suspendu et/ou amorti en raison de la variation de pression provoquée dans du fluide (6).

2. Manchon selon la revendication 1, caractérisé en ce que dans sa position de travail, l'anneau creux (5) est disposé de façon que le tube (11) ne l'entoure pas complètement et que l'anneau s'enfonce dans le tube par un mouvement de compression.

3. Manchon selon la revendication 1, caractérisé en ce que le tube (11) entoure complètement l'anneau creux (5 ; 20).

4. Manchon selon l'une des revendications 1 à 3, caractérisé en ce que l'anneau creux (5 ; 20) est en matière plastique élastique extensible.

5. Manchon selon la revendication 4, caractérisé en ce que le fluide est incompressible.

6. Manchon selon l'une des revendications 1 à 3, caractérisé en ce que l'anneau creux souple est en matériau non élastique.

7. Manchon selon la revendication 4 ou 6, caractérisé en ce que le fluide est compressible.

8. Manchon selon la revendication 7, caractérisé en ce que le fluide (6) est un gaz compressible.

9. Manchon selon la revendication 5, caractérisé en ce que le fluide (6) est un liquide incompressible.

10. Manchon selon l'une des revendications 1 à 9, caractérisé en ce que la barre (10) comme le tube (11) sont de section circulaire.

11. Manchon selon l'une des revendications 1 à 10, caractérisé en ce que l'extension de la barre (10) ainsi que celle du tube (11) qui lui est concentrique est incurvée ou droite.

12. Manchon selon l'une des revendications 1 à 11, caractérisé en ce que le fluide (6) est un liquide ou un gaz ayant dans chaque cas une viscosité élevée.

13. Manchon selon l'une des revendications 1 à 12, caractérisé en ce que l'anneau creux (5 ; 20) présente une extension plus grande en sens axial (7) qu'en sens radial (8).

14. Manchon selon l'une des revendications 1 à 13, caractérisé en ce que l'espace creux (3) de l'anneau creux (5) présente sur sa section libre des rebords (13), nappes (14) délimitants ou autres obstacles, de sorte que la section d'écoulement (15) soit réduite pour le fluide en service dans le manchon.

15. Manchon selon l'une des revendications 1 à 14, caractérisé en ce que l'anneau creux souple (5; 20) présente sur sa face externe, des rainures cannelures et nappes et autres surélévations et creux dans le sens longitudinal de la barre (10) qui sont en prise avec des surélévations et des creux correspondants de la barre (10) et les deux pièces sont en prise au moins en partie mécaniquement dans le sens périphérique de la barre (10).

16. Manchon selon l'une des revendications 1 à 14, caractérisé en ce que l'anneau creux souple (5,20) présente sur sa face externe des rainures, cannelures et nappes et autres surélévations et creux, transversalement au sens longitudinal de la barre (10), qui sont en prise avec des surélévations et des creux correpondants de la barre (10) et les deux pièces sont en prise au moins en partie dans le sens longitudinal de la barre (10).

17. Manchon selon l'une des revendications 1 à 16 avec transversalement à son axe longitudinal un anneau creux (20) ouvert par une fente circulaire sur sa face externe (21), caractérisé en ce que le tube (11) est en deux parties et que chaque pièce de tube possède une bride (23) et que chaque bord (27) formé par l'anneau creux ouvert est fixé entre l'une des deux brides de chaque partie de tube et un anneau médian (24) spécial.

18. Manchon selon la revendication 17, caractérisé en ce que la bride (23) est en liaison rigide avec le tube.

19. Manchon selon la revendication 17 ou 18, caractérisé en ce que la bride (23) présente parallèlement au tube, mais à l'extérieur de sa section libre des trous (28).

20. Manchon selon la revendication 19 avec au moins un orifice de remplissage (34) pour le fluide, caractérisé en ce qu'on prévoit l'orifice de remplissage (34) dans l'anneau médian (24).

21. Manchon selon l'une des revendications 1 à 20, caractérisé en ce que l'anneau médian comprend une paroi interne (31) cylindrique.

22. Manchon selon la revendication 21, caractérisé en ce que l'anneau médian présente deux surfaces obliques coniques (25) disposées symétriquement l'une par rapport à l'autre, allant en se rétrécissant en cône sur chaque bride (25).

23. Manchon selon l'une des revendications 1 à 22, caractérisé en ce que l'anneau médian (24) comprend au moins une gorge (32) circulaire dans la zone de la paroi interne (31) cylindrique pour recevoir un corps d'amortissement (33).

24. Manchon selon la revendication 23, caractérisé en ce que la gorge (32) a une section demi-circulaire et que le corps d'amortissement a la forme d'un joint torique (33).

25. Manchon selon l'une des revendications 17 à 24, caractérisé en ce que la bride (23) présente une contre surface (26) correspondant à la surface oblique (25) en cône pour serrer le bord (27) de l'anneau creux (20).

26. Manchon selon la revendication 9, caractérisé en ce que le fluide est un liquide non newtonien.

FIG. 1

FIG. 2

FIG. 3